# FASCICULE DE BREVET EUROPEEN

(11) **EP 0 382 092 B1**
(45) Date de publication et mention de la délivrance du brevet: **28.07.1993**
(21) Numéro de dépôt: 90101998.4
(22) Date de dépôt: 01.02.1990
(51) Int. Cl.: A47J 43/07

(54) **Pied de mixage**
Mixstab
Mixing device

(30) Priorité: 06.02.1989 FR 8901491
(43) Date de publication de la demande: 16.08.1990
(73) Titulaire: MOULINEX, F-93170 Bagnolet (FR)
(72) Inventeur: Diore, Christian Denis, F-72600 Mamers (FR); Linger, Jean-Jacques, F-72600 Mamers (FR)
(74) Mandataire: May, Hans Ulrich, Dr.

(56) Documents cités:
- DE-B- 1 224 006
- FR-E- 76 848
- US-A- 3 559 956
- PATENT ABSTRACTS OF JAPAN vol. 4, no. 140 (C-26)(622) 3 octobre 1980,

## Description

L'invention concerne un pied de mixage destiné, en particulier, à broyer des matières alimentaires et comprenant une garde tubulaire dont la partie supérieure est adaptée à être montée sur un bloc moteur et dont la partie inférieure est munie d'une cloche présentant une paroi latérale pourvue d'ouvertures, ainsi qu'un arbre rotatif disposé longitudinalement dans ladite garde, l'extrémité supérieure dudit arbre étant destinée à être accouplée audit bloc moteur, tandis que l'extrémité inférieure dudit arbre est solidaire en rotation d'un outil de travail disposé dans la cloche.

Un tel pied de mixage est décrit dans le brevet DE-B-1 224 006. D'après ce document, l'outil de travail du pied de mixage comprend des couteaux rotatifs qui sont principalement utilisés pour la préparation des potages et des légumes ; toutefois, un tel outil de travail nécessite un assez long temps de fonctionnement pour obtenir une homogénéisation du liquide et ne permet pas de réaliser des purées.

L'invention a pour but d'apporter un perfectionnement au pied de mixage du type ci-dessus, de manière qu'il accomplisse parfaitement et rapidement les fonctions auxquelles il est destiné et à lui permettre de confectionner des purées.

Selon l'invention, un pied de mixage du type décrit précédemment, est plus particulièrement caractérisé en ce que l'outil de travail comporte au moins une roue dentée sur sa périphérie qui est montée rotative autour d'un axe agencé non-coaxialement à l'arbre et dont les dents sont destinées à venir s'engrener avec une couronne dentée formée sur la surface latérale interne de la cloche, les espaces compris entre les dents de cette couronne communiquant avec l'extérieur de ladite cloche par les ouvertures.

Grâce à ce pied de mixage, on comprendra que les aliments sont entraînés entre les dents, broyés, puis poussés au travers des ouvertures de la cloche favorisant ainsi l'homogénéisation, même si l'aliment n'est pas liquide. De plus, ces ouvertures agissent comme plusieurs filières et favorisent l'extrusion de la purée.

D'autres formes d'éxécution font l'objet des revendications independantes

Les caractéristiques et avantages de l'invention ressortiront d'ailleurs de la description qui va suivre, à titre d'exemple, en référence au dessin annexé dans lequel :

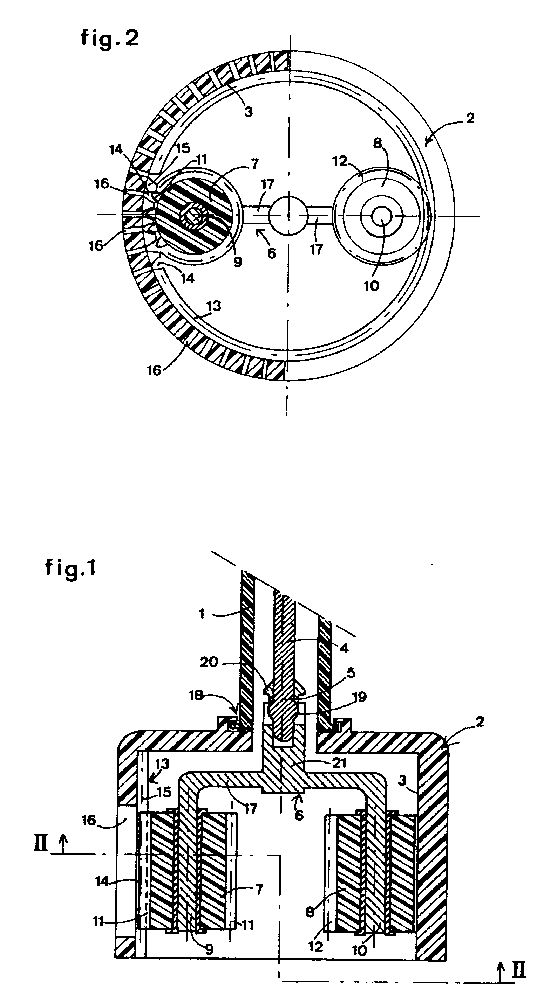

la figure 1 représente, en coupe verticale, un pied de mixage selon l'invention ; la figure 2 est une coupe selon la ligne II-II de la figure 1.

Selon la figure 1, le pied de mixage représenté comprend une garde tubulaire 1 dont la partie supérieure est adaptée à être montée sur un bloc moteur (non représenté) et dont la partie inférieure est munie d'une cloche 2 présentant une surface latérale interne cylindrique 3, ainsi qu'un arbre rotatif 4 disposé longitudinalement dans ladite garde 1, l'extrémité supérieure de l'arbre 4 étant destinée à être accouplée audit bloc moteur, tandis que l'extrémité inférieure 5 de cet arbre 4 est solidaire en rotation d'un outil de travail 6 disposé dans la cloche.

Selon l'invention, l'outil de travail 6 comporte deux roues 7,8 dentées sur leur périphérie qui sont disposées symétriquement par rapport à l'arbre 4 et dont chacune est montée rotative autour d'un axe 9-10 agencé non-coaxialement à l'arbre 4. Les dents 11-12 de chaque roue sont destinées à venir s'engrener avec une couronne dentée 13 formée sur la surface latérale interne 3 de la cloche, les espaces 14 compris entre les dents 15 de la couronne 13 communiquant avec l'extérieur de la cloche par des ouvertures 16 en forme de fente pratiquées dans la paroi latérale de la cloche 2.

Comme on le voit mieux sur la figure 1, chaque roue dentée 7-8 est cylindrique et est montée attachée à l'extrémité inférieure 5 de l'arbre 4 au moyen d'un bras coudé 17 dont le tronçon d'extrémité constituant l'axe 9-10 de la roue s'étend selon une direction parallèle à l'arbre 4. En outre chaque roue dentée 7-8 et les espaces 14 s'étendent axialement pratiquement sur toute la hauteur des ouvertures 16. On peut également concevoir de remplacer les bras coudés 17 par un disque solidaire de l'arbre 4 et portant les axes 9-10 des roues.

On comprendra que lorsque l'outil de travail 6 est mis en rotation à une vitesse choisie aux alentours de 5000 Tours/minute, les roues dentées 7-8 parcourent la totalité de la couronne 13. Les matières alimentaires situées sous la cloche 2 sont, brassées par les dents 11-12 qui sont tournées vers l'intérieur de la cloche, et écrasées entre les dents 15 de la couronne 13 et les dents 11-12 correspondantes des roues 7-8, puis sous l'effet de la compression engendrée par les dents 11-12 dans les espaces 14, les matières écrasées sont extrudées au travers des fentes 16, sur toute la périphérie de la cloche 2.

Ainsi, grâce à ce pied de mixage, on confectionne des potages, purées, coulis et compotes ayant une grande homogénéité.

Dans le but de faciliter le nettoyage de ce pied de mixage l'invention prévoit que la cloche 2 et l'outil 6 sont montés de façon amovible respectivement sur la partie inférieure de la garde tubulaire au moyen d'un dispositif à baïonnette 18 et sur l'extrémité inférieure 5 de l'arbre 4 au moyen d'un dispositif d'encliquetage élastique comprenant un bossage 19 porté par l'extrémité inférieure 5 et une pince élastique 20 solidaire d'une embase 21 reliant les bras coudés 17. Cette simplicité de montage autorise donc un nettoyage aisé de la cloche 2 et des roues 7 et 8.

## Revendications

1. Pied de mixage destiné, en particulier, à broyer des matières alimentaires et comprenant une garde tubulaire (1) dont la partie supérieure est adaptée à être montée sur un bloc moteur et dont la partie inférieure est munie d'une cloche (2) présentant une paroi latérale pourvue d'ouvertures (16), ainsi qu'un arbre rotatif (4) disposé longitudinalement dans ladite garde, l'extrémité supérieure dudit arbre étant destinée à être accouplée audit bloc moteur, tandis que l'extrémité inférieure (5) dudit arbre est solidaire en rotation d'un outil de travail (6) disposé dans la cloche (2),
**caractérisé en ce que** ledit outil de travail (6) comporte au moins une roue (7-8) dentée sur sa périphérie qui est montée rotative autour d'un axe (9-10) agencé non-coaxialement à l'arbre (4) et dont les dents (11-12) sont destinées à venir s'engrener avec une couronne dentée (13) formée sur la surface latérale interne (3) de la cloche (2), les espaces (14) compris entre les dents de cette couronne communiquant avec l'extérieur de ladite cloche par les ouvertures (16).

2. Pied de mixage selon la revendication 1,
**caractérisé en ce que** les dents (11-12) de la roue et les espaces (14) s'étendent axialement pratiquement sur toute la hauteur des ouvertures (16).

3. Pied de mixage selon la revendication 1 ou 2
**caractérisé en ce que** l'outil de travail (6) comporte deux roues dentées (11 et 12) disposées symétriquement par rapport à l'arbre (4).

4. Pied de mixage selon la revendication 3,
**caractérisé en ce que** la cloche (2) présentant une surface latérale interne cylindrique (3), chaque roue dentée (7-8) est cylindrique et est reliée à l'extrémité inférieure de l'arbre (4) au moyen d'un bras coudé (17) dont le tronçon d'extrémité constituant l'axe (9-1O) de la roue s'étend selon une direction parallèle audit arbre (4).

5. Pied de mixage selon l'une quelconque des revendications précédentes,
**caractérisé en ce que** la cloche (2) et l'outil (6) sont montés de façon amovible respectivement sur la partie inférieure de la garde tubulaire (1) et sur l'extrémité inférieure (5) de l'arbre rotatif.

## Patentansprüche

1. Mixstab, der besonders zum Zerkleinern von Lebensmitteln bestimmt ist, mit einem Schutzrohr (1) dessen oberer Teil zur Montage an einem Motorblock eingerichtet ist und dessen unterer Teil mit einer Glocke (2) versehen ist, die eine mit Öffnungen (16) versehene Seitenwand aufweist, sowie mit einer längs im Schutzrohr angeordneten drehbaren Welle (4), deren oberes Ende zur Kupplung mit dem Motorblock bestimmt ist, während das untere Ende (5) der Welle drehfest mit einem in der Glocke (2) angeordneten Arbeitswerkzeug verbunden ist, **dadurch gekennzeichnet**, daß das Arbeitswerkzeug (6) mindestens ein an seinem Umfang gezahntes Rad (7-8) aufweist, das um eine zur Welle (4) nicht koaxial angeordnete Achse (9-10) drehbar montiert ist und dessen Zähne (11-12) mit einem Zahnkranz (13) kämmen, der an der inneren Seitenfläche (3) der Glocke (2) ausgebildet ist, wobei die zwischen den Zähnen dieses Zahnkranzes liegenden Zwischenräume (14) mit der Umgebung der Glocke durch die Öffnungen (16) in Verbindung stehen.

2. Mixstab nach Anspruch 1, dadurch gekennzeichnet, daß die Zähne (11-12) des Zahnrades und die Zwischenräume (14) sich axial praktisch über die ganze Höhe der Öffnungen (16) erstrecken.

3. Mixstab nach den Ansprüchen 1 oder 2, dadurch gekennzeichnet, daß das Arbeitswerkzeug (6) zwei zur Welle (4) symmetrisch angeordnete Zahnräder (11-12) aufweist.

4. Mixstab nach Anspruch 3, dadurch gekennzeichnet, daß die Glocke (2) eine zylindrische innere Seitenfläche (3) aufweist und jedes Zahnrad (7-8) zylindrisch und mit dem unteren Ende der Welle (4) mittels eines abgewinkelten Armes (17) verbunden ist, dessen Endabschnitt die Achse (9-10) des Zahnrades bildet und sich in einer zur Welle (4) parallelen Richtung erstreckt.

5. Mixstab nach einem der vorangehenden Ansprüche, dadurch gekennzeichnet, daß die Glocke (2) und das Werkzeug (6) jeweils am unteren Teil des Schutzrohrs (1) und am unteren Ende (5) der drehbaren Welle abnehmbar montiert sind.

## Claims

1. A blending attachment intended, in particular, to crush food materials and comprising a tubular guard (1), the upper part of which is adapted to be mounted on a motor unit and the lower part of which is equipped with a bell-shaped casing (2) having a lateral wall provided with apertures (16), and also a rotary spindle (4) disposed longitudinally in said guard, the upper end of said spindle being intended to be connected to said motor unit, whereas the lower end (5) of said spindle is integral during rotation with a work tool (6) disposed in the bell-shaped casing (2),
**characterised in that** said work tool (6) comprises at least one wheel (7 - 8) having teeth over its periphery, which is rotationally mounted around an axis (9 - 10) disposed non-coaxially to the spindle (4) and the teeth (11 -12) of which are intended to come to mesh with an toothed ring (13) formed on the internal lateral surface (3) of the bell-shaped casing (2), the spaces (14) between the teeth of said toothed ring communicating with the exterior of said bell-shaped casing by the apertures (16).

2. A blending attachment according to Claim 1,
**characterised in that** the teeth (11 - 12) of the wheel and the spaces (14) extend axially over practically the entire height of the apertures (16).

3. A blending attachment according to Claim 1 or 2, **characterised in that** the work tool (6) comprises two toothed wheels (11 and 12) disposed symmetrically with respect to the spindle (4).

4. A blending attachment according to Claim 3,
**characterised in that** as the bell-shaped casing (2) has a cylindrical internal lateral surface (3), each toothed wheel (7 - 8) is cylindrical and is connected to the lower end of the spindle (4) by means of a bent arm (17), the end section of which forms the axis (9 - 10) of the wheel and extends in a direction parallel to said spindle (4).

5. A blending attachment according to any one of the above claims,
**characterised in that** the bell-shaped casing (2) and the tool (6) are detachably mounted on the lower part of the tubular guard (1) and on the lower end (5) of the rotary spindle.
